# EUROPEAN PATENT SPECIFICATION

(11) **EP 4 390 006 B1**
(45) Date of publication and mention of the grant of the patent: **22.10.2025**
(21) Application number: 23813253.4
(22) Date of filing: 08.05.2023
(51) Int. Cl.: E04D 13/18, H02S 20/25, E04D 1/28

(54) **PHOTOVOLTAIC TILE AND PHOTOVOLTAIC ROOF WITH SLOPE**
PHOTOVOLTAIK-DACHZIEGEL UND PHOTOVOLTAIK-DACH MIT SCHRÄGER HANG
TUILE PHOTOVOLTAÏQUE ET TOIT PHOTOVOLTAÏQUE À PENTE

(30) Priority: 26.10.2022 CN 202211318876
(43) Date of publication of application: 26.06.2024
(73) Proprietor: Trina Solar Co., Ltd, Changzhou, Jiangsu 213031 (CN)
(72) Inventor: XU, Jianmei, Changzhou, Jiangsu 213031 (CN); XIE, Yifan, Changzhou, Jiangsu 213031 (CN); ZENG, Fei, Changzhou, Jiangsu 213031 (CN)
(74) Representative: Nederlandsch Octrooibureau
(86) International application number: PCT/CN2023/092663
(87) International publication number: WO 2024/087571

(56) References cited:
- EP-A1- 2 442 371
- CN-A- 110 952 725
- CN-A- 116 065 762
- CN-U- 214 995 280
- CN-U- 217 362 966
- CN-U- 217 362 971
- DE-A1- 19 823 356
- DE-U1- 212018 000 327
- JP-A- 2014 201 987
- US-A1- 2015 354 217

## Description

### Technical Field

The present application mainly relates to the technical fields of photovoltaics, and in particular to a photovoltaic tile and a sloped photovoltaic roof.

### Background

Photovoltaic tiles comprise a tile base and a photovoltaic component which needs to be installed on the photovoltaic tiles when the photovoltaic tiles work. The main method of transporting photovoltaic tiles to the installation site is to transport the assembled photovoltaic tiles to the installation site. Due to the different structures and large differences in strength between the tile bases and the photovoltaic components, special packaging is required during transportation, which results in costs rise.

In addition, in order to improve construction efficiency and reduce maintenance costs, it is required that the tile base and photovoltaic component can be quickly assembled and disassembled. In addition, the area difference between photovoltaic tiles and photovoltaic components, as well as the gaps between photovoltaic components of different photovoltaic tiles will lead to poor visual effects and easy dust accumulation. EP2442371A1 describes a roofing structure for buildings, in particular houses, blocks and/or dwellings.

Therefore, how to reduce the transportation costs and maintenance costs of photovoltaic tiles, improve construction efficiency, improve the aesthetics of photovoltaic tiles and prevent dust accumulation are issues that need to be solved urgently.

### Summary

The technical problem to be solved by the present invention is to provide a photovoltaic tile and a sloped photovoltaic roof which may reduce transportation costs and prevent dust accumulation.

In order to solve the above technical problems, The present application provides a photovoltaic tile according to claim 1 and a sloped photovoltaic roof comprising a plurality of said photovoltaic tiles.

In one embodiment of the present invention, the first side of the tile base has a connector escape groove, and the connector escape groove is used to accommodate the connector of another photovoltaic tile.

In one embodiment of the present invention, the tile base also comprises an installation portion located on the second side of the tile base for overlapping with the beam used for installing photovoltaic tile.

In one embodiment of the present invention, the first connecting part comprises a plurality of mounting holes; the second connecting part comprises a plurality of buckles, wherein each buckle is engaged with the corresponding mounting hole.

In one embodiment of the present invention, the first side of the tile base has a plurality of cable escape grooves.

In one embodiment of the present invention, the raising portion has a raising surface and a fixing surface, and there is a default angle between the raising surface and the fixing surface, wherein the raising portion is fixedly connected to the second surface through the fixing surface.

In one embodiment of the present invention, the tile base further comprises a first drainage groove, the first drainage groove is located on one side of the tile base, the first drainage groove extends along the first direction, wherein the first drainage groove has an opening at a raising end away from the photovoltaic panel.

In one embodiment of the present invention, the tile base further comprises a second drainage groove located on the second surface of the tile base, the second drainage groove extends along the second direction, and has an opening toward the outside of the tile base along the second direction.

In one embodiment of the present invention, the second surface has a first inclined surface and a second inclined surface, and the first inclined surface and the second inclined surface are respectively adjacent to two opposite sides of the base plate along the second direction, wherein, one side of the first inclined surface close to the raising portion is raising along the second direction, and one side of the second inclined surface close to the raising portion is raising along the second direction.

In one embodiment of the present invention, the number of the tile bases covered by one photovoltaic component is equal to or greater than 2.

Another aspect of the present invention also provides a sloped photovoltaic roof, the photovoltaic roof comprises a plurality of photovoltaic tiles according to any one of claims 1 to 11.

The photovoltaic tiles and photovoltaic roofs of the present application raise one end of the photovoltaic component through the raising portion so that the adjacent photovoltaic panels are flush, which has the effect of preventing dust accumulation; in addition, the tile base and the photovoltaic component in the photovoltaic tile are detachably connected through the first connecting part and the second connecting part, which is beneficial to reducing transportation costs.

### Brief Description of the Drawings

In order to make the above purposes, features and advantages of the present application more obvious and understandable, the specific embodiments of the present application are described in detail below in conjunction with the drawings, wherein:
Fig. 1 is a schematic three-dimensional view of a profile according to an embodiment of the present application;
Fig. 2 is a schematic front view of the profile in Fig. 1;
Fig. 3 is a schematic top view of the profile in Fig. 1;
Fig. 4 is a schematic three-dimensional view of a tile base according to an embodiment of the present application.
Fig. 5 is a schematic front view of the profile in Fig. 4;
Fig. 6 is a schematic top view of the profile in Fig. 4;
Fig. 7 is a schematic three-dimensional view of a tile base according to another embodiment of the present application;
Fig. 8 is a schematic three-dimensional view of a photovoltaic component according to an embodiment of the present application;
Fig. 9 is a schematic front view of the profile in Fig. 8;
Fig. 10 is a schematic top view of the profile in Fig. 10;
Fig. 11 is a schematic three-dimensional view of a tile base according to an embodiment of the present application.
Fig. 12 is a schematic three-dimensional view of a photovoltaic component according to an embodiment of the present application;
Fig. 13 is a schematic three-dimensional view of a sloped photovoltaic roof according to the present invention;
Fig. 14 is a schematic front view of the photovoltaic roof in Fig. 13;
Fig. 15 is a schematic three-dimensional view of a photovoltaic roof according to an embodiment of the present application;
Fig. 16 is a schematic three-dimensional view of a photovoltaic roof according to another embodiment of the present application;

### Preferred Embodiment of the Present Invention

In order to make the above objects, features and advantages of the present application more obvious and understandable, the specific embodiments of the present application are described in detail below with reference to the drawings.

Many specific details are set forth in the following description to fully understand the present application, but the present application can also be implemented in other ways different from those described here, so the present application is not limited by the specific embodiments disclosed below.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

Next, the photovoltaic tile of the present application will be described through specific embodiments.

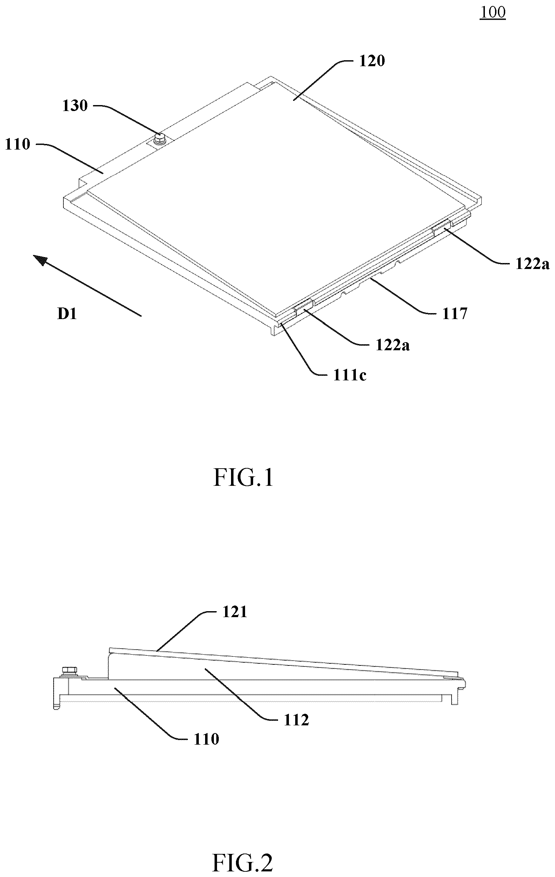

Fig. 1 to Fig. 3 are respectively a schematic three-dimensional view, a schematic front view and a schematic top view of a profile according to an embodiment of the present application. Referring to Fig. 1 to Fig. 3, the photovoltaic tile 100 includes a tile base 110 and a photovoltaic component 120. Next, the tile base 110 and the photovoltaic component 120 will be described respectively.

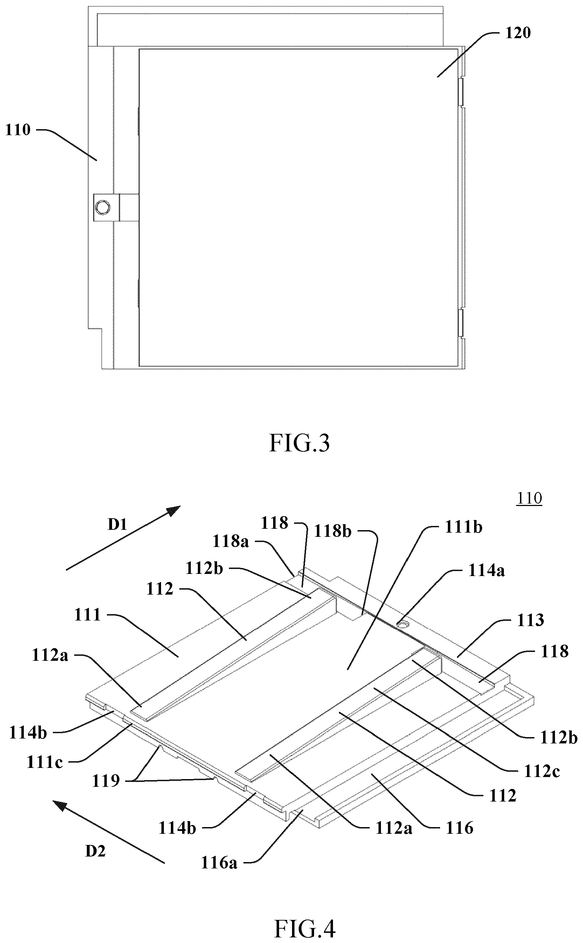

Fig. 4 to Fig. 6 are respectively a schematic three-dimensional view, a schematic front view and a schematic top view of a tile base according to an embodiment of the present application. Referring to Fig. 4 to Fig. 6, the tile base 110 includes a base plate 111, a raising portion 112, a splicing area 113 and a first connecting part.

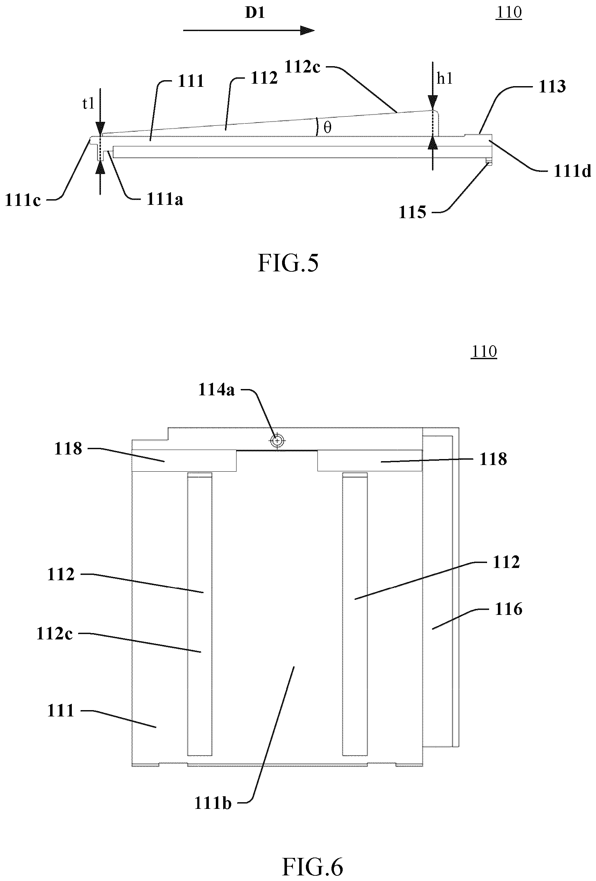

Specifically, referring to Fig. 4 and Fig. 5, the tile base has opposite first side 111c and second side 111d, and the base plate 111 has opposite first surface 111a and second surface 111b. When the base plate 111 is laid on the roof, the first surface 111a faces the roof. The raising portion 112 is located on the second surface 111b, and the raising portion 112 extends along the first direction D1, wherein the first direction D1 points from the first side 111c to the second side 111d. The connection between the raising portion 112 and the second surface 111b includes screw connection, bonding, etc., or the base plate 111 and the raising portion 112 located thereon can be simultaneously manufactured through an integrated molding process.

It can be understood that the number of raising portion 112 in this application is not limited to the two shown in Fig. 4. It can also be 1, 3 or 4.

Referring to Fig. 4, the height of the raising portion 112 relative to the second surface 111b gradually increases along the first direction D1 from the first end 112a to the second end 112b. As shown in Fig. 5, the second end 112b and the second side 111d is adjacent. As shown in Fig. 5 and Fig. 6, in one embodiment, the raising portion 112 has a raising surface 112c and a fixing surface. Here, the fixed surface is connected to the second surface 111b of the base plate 111, so the fixed surface cannot be seen in the figure. There is a default angle θ between the raising surface 112c and the fixed surface. The height of the second end 112b relative to the second surface 111b can be adjusted by changing the default angle θ. Referring to Fig. 4 and Fig. 5, in this application, the height *h1* of the second end 112b of the raising portion 112 relative to the second surface 111b is the same as the thickness *t1* of the tile base 110 along the first side 111c. In this way, when multiple photovoltaic tiles are overlapped adjacently along the first direction, the photovoltaic panels can be kept flush. In addition, one end of the photovoltaic component is raised through the raising portion, thereby forming a space between the photovoltaic component and the tile base, which is beneficial to heat dissipation of the photovoltaic component.

It should be noted that the raising portion in this application is not limited to the situation shown in Fig. 4. For example, on the basis of what is shown in FIG. 4, the size of the raising portion 112 along the first direction D1 may be shortened, or the size of the raising portion 112 along the second direction D2 may be increased. Here, as shown in Fig. 4, the second direction D2 refers to the extension direction of the splicing area 113.

Referring to Fig. 4 and Fig. 5, the base plate 111 further has a splicing area 113 and an installation portion 115. The splicing area 113 is close to the second side 111d of the tile base 110 and adjacent to the second end 112b of the raising portion 112. The installation portion 115 is located on the first surface 111a of the base plate 111 and on the second side 111d. When laying photovoltaic tiles on the roof, the tile base 110 can be overlapped with other tile base located at an upper end along the first direction D1 through the splicing area 113, and the tile base 110 can be overlapped on the beam used for installing photovoltaic tiles through the installation portion 115. The connection method and laying method between the tile bases will be described in detail later and will not be elaborated here.

The first connecting part of the tile base in this application is used to detachably connect the tile base and the photovoltaic component. Referring to Fig. 4 and Fig. 6, the first connecting part is the installation hole 114a located at the upper end of the base plate 111 along the first direction D1. It should be noted that the first connecting part in this application is not limited to the above embodiment. For example, it may also be other connection structures that can be quickly detached, and it may also be located at other positions on the base plate. The connection method between the tile base and the photovoltaic component will be explained later and will not be elaborated here.

Referring to Fig. 4 and Fig. 6, in some embodiments, the tile base further includes a first drainage groove 116. The first drainage groove 116 is adjacent to one of the two sides opposite along the second direction D2 of the tile base, and the first drainage groove 116 extends along the first direction D1. The first drainage groove 116 has an opening 116a at one end close to the first end 112a of the raising portion 112. The first drainage groove 116 can be used to collect rainwater dripping onto the surface of the photovoltaic panel, and then drain the rainwater out of the tile base through the opening 116a.

Continuing to refer to Fig. 4 to Fig. 6, the tile base 110 further includes a second drainage groove 118 located on the second surface 111b. The second drainage groove 118 extends along the second direction D2 and has an opening 118a toward the outside of the tile base along the second direction D2. As shown in Fig. 4, the bottom surface of the second drainage groove 118 has a certain slope. Specifically, the second drainage groove 118 has another end 118b opposite to the opening 118a along the second direction D2, and the opening 118a is closer to the first surface 111a than the other end 118b. Therefore, the water on the second surface 111b can be quickly discharged through the second drainage groove 118. It should be noted that the form of the second drainage groove in this application is not limited to the above embodiments. For example, in Fig. 4, there two second drainage grooves relatively distributed along the second direction D2. In some other embodiment, the number of the second drainage groove can also be one. For example, in some embodiments, when there is one second drainage groove, it is equivalent to extending one second drainage groove 118 in Fig. 4 along the second direction D2 so that the other end 118b opposite to the opening 118a is close to the first drainage groove 116.

In addition to accelerating the drainage of water on the second surface through the above-mentioned second drainage groove, the drainage of water on the second surface can also be accelerated by arranging an inclined surface on the second surface.

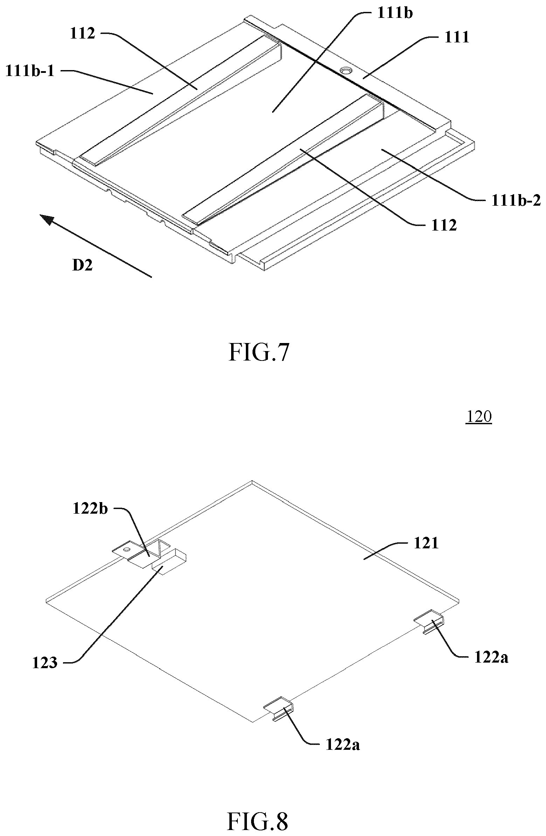

Fig. 7 is a schematic three-dimensional view of a tile base according to an embodiment of the present application. Referring to Fig. 7, the second surface 111b has a first inclined surface 111b-1 and a second inclined surface 111b-2. Here, the first inclined surface 111b-1 and the second inclined surface 111b-2 are respectively adjacent to the two opposite sides of the base plate 111 along the second direction D2, the side of the first inclined surface 111b-1 close to the raising portion 112 is raised along the second direction D2, and the side of the second inclined surface 111b-2 close to the raising portion 112 is raised along the second direction D2, so that the water on the second surface 111b is quickly drained by the first inclined surface 111b-1 and the second inclined surface 111b-2.

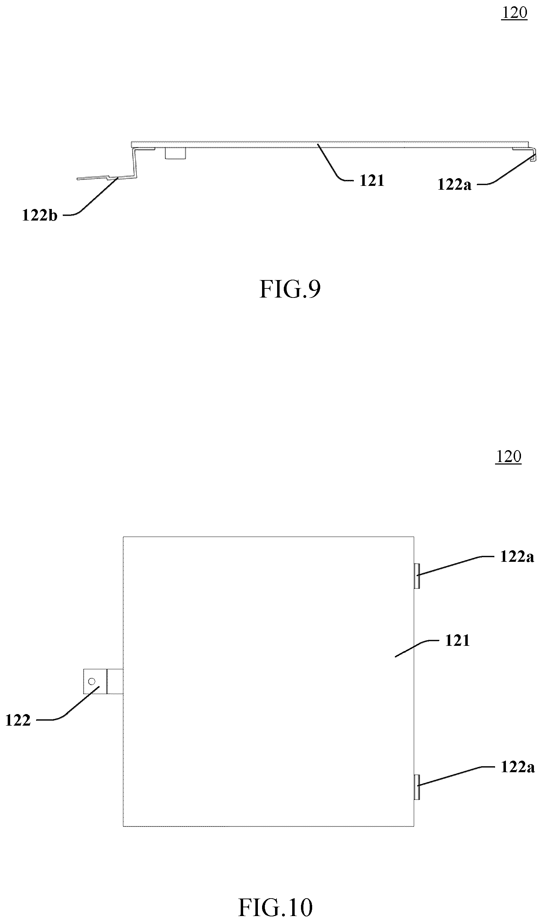

Referring to Fig. 4 and Fig. 5, in some embodiments, the first side 111c of the tile base 110 has a plurality of cable escape grooves 119. The cable escape grooves 119 can be used to accommodate cables, which can prevent the cables from interfering with the overlap between the tile bases 110, thereby improving the stability of the overlap between the tile bases 110. Fig. 8 to Fig. 10 are schematic three-dimensional view, a schematic front view and a schematic top view of a photovoltaic component according to an embodiment of the present application.

Referring to Fig. 8 to Fig. 10, the photovoltaic component 120 includes a photovoltaic panel 121 and a second connecting part. Referring to Fig. 2, the photovoltaic panel 121 is disposed on the raising portion 112 and is detachably connected to the tile base 110 through the cooperation between the first connecting portion and the second connecting portion. The first connecting part and the second connecting part in this application can realize the quick disassembly between the tile base and the photovoltaic component. This application does not limit the specific structure of the first connecting part and the second connecting part, which include all the structures that can realize quickly detachable connection between the tile base and the photovoltaic component. To facilitate understanding of the connection components in this application, two nonlimiting embodiments are given here.

### Embodiment 1

Referring to Fig. 4 and Fig. 8, in this embodiment, the first connecting part includes an installation hole 114a provided on the splicing area 113 and a snap-in slot 114b opposite to the installation hole 114a. In this embodiment, the installation hole 114a are implemented as a screw hole. As shown in Fig. 4, the installation hole 114a is located in the middle of the splicing area 113 along the second direction D2 and is close to the second end 112b of the raising portion 112. The snap-in slot 114b is a slot located at one end of the base plate 111 close to the first side 111c.

Referring to Fig. 8, the second connecting part includes snap-in pieces 122a and a connector 122b opposite to each other. The connector 122b is located at the raising end of the photovoltaic panel 121and detachably connected to the photovoltaic panel 121. The connector 122b has a through hole corresponding to the installation hole 114a.

The tile base 110 and the photovoltaic component 120 are installed as follows. First, as shown in Fig. 1, Fig. 4 and Fig. 8, snap the two snap-in pieces 122a of the photovoltaic panel 121 respectively into the corresponding snap-in slots 114b on the base plate 111; then, align the through hole of the connector 122b with the installation hole 114a; then, use the screw 130 to pass through the through hole of the connector 122b and the installation hole 114a, thereby connecting the connector 122b and the installation hole 114a together. It should be noted that the above-mentioned embodiments are only exemplary. For example, the installation hole 114a can be a guide hole without threads, under the positioning of the guide hole, the photovoltaic component can be connected to the tile base through a self-tapping screw passing through the through hole of the connector 122b.

### Embodiment 2

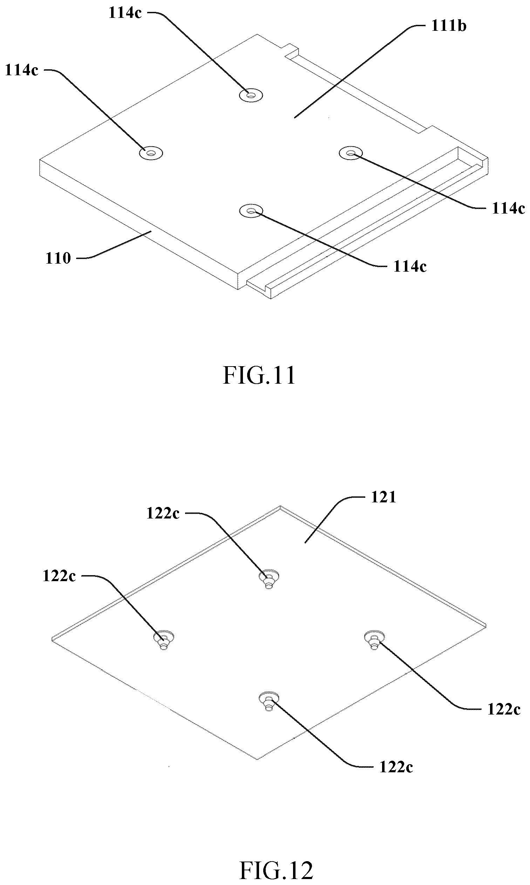

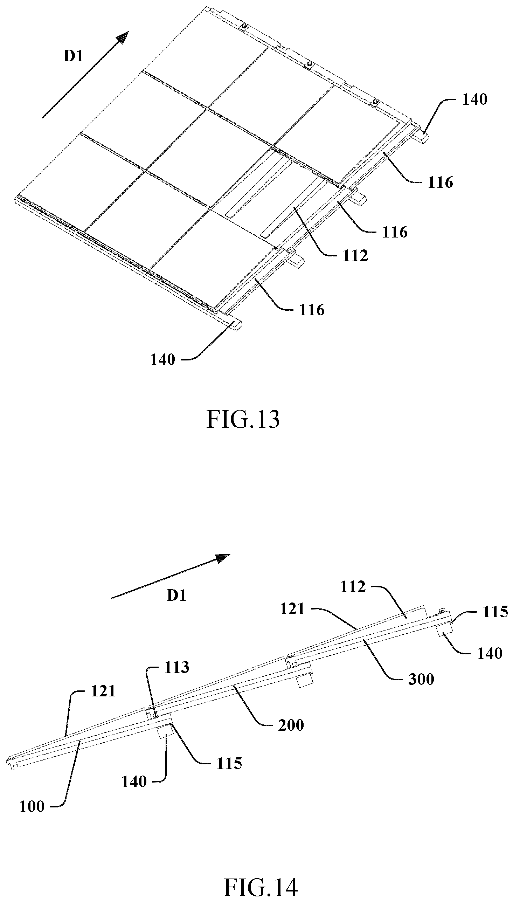

FIG. 11 is a schematic three-dimensional view of a tile base according to an embodiment of the present application, and Fig. 12 is a schematic three-dimensional view of a photovoltaic component according to an embodiment of the present application. Referring to Fig. 12, in the second embodiment, the first connecting part is implemented as four installation holes 114c located on the second surface 111b of the tile base 110. Referring to Fig. 13, the second connecting part is implemented as four buckles 122c located on the side of the photovoltaic panel 121 facing away from the sun. When the photovoltaic component is connected to the tile base, the four buckles 122c are respectively engaged with the corresponding installation holes 114c, so that the photovoltaic component and the tile base can be quickly assembled and disassembled. It should be noted that Fig. 11 and Fig. 12 only show part of the structure of the tile base and photovoltaic components, for other details, please refer to the relevant descriptions above and will not be repeated here.

When packaging and transporting photovoltaic tiles to the installation site, due to the different structures and strengths of the photovoltaic components and the tile bases, special packaging materials need to be designed if the photovoltaic components and the tile bases are assembled and then packaged. In addition, assembled photovoltaic tiles have higher logistics requirements, which increases the packaging cost and transportation cost of photovoltaic tiles. In the above embodiment, the first connecting part and the second connecting part can realize quick detachment between the tile base and the photovoltaic component. In this way, the tile bases and photovoltaic components can be packaged and transported separately, reducing packaging and transportation costs. The photovoltaic components can also be quickly disassembled and installed when they need to be replaced. In addition, in this application, the photovoltaic panel is connected to the tile base through the second connecting part located on the side of the photovoltaic panel facing away from the sun. Compared with the design of providing connecting parts on the side of the photovoltaic panel, there is no frame on the side of the photovoltaic panel in this application that is higher than the side of the photovoltaic panel facing the sun, so it is helpful for rainwater to wash away the dust deposited on the side of the photovoltaic panel facing the sun.

As shown in Fig. 1, in some embodiments, the first side 111c of the tile base 110 has a connector escape groove 117. The bottom surface of the connector escape groove 117 faces the direction of the roof when the photovoltaic tile 100 is installed. Fig. 13 is a schematic three-dimensional view of a photovoltaic roof according to an embodiment of the present application, and Fig. 14 is a schematic front view of the photovoltaic roof in Fig. 1. As shown in Fig. 13 and Fig. 14 , when two adjacent photovoltaic tiles 100 and 200 overlap, the connector escape groove 117 of the photovoltaic tile 200 is used to accommodate the connector of the photovoltaic tile 100. This will help improve the stability of the overlap between adjacent photovoltaic tiles.

Referring to Fig. 8, in one embodiment, the photovoltaic component 120 further includes a junction box 123. The junction box 123 is located on the side of the photovoltaic component 120 facing away from the sun. The photovoltaic component 120 can be connected to external components through the junction box 123.

In order to facilitate understanding of the connection method between photovoltaic tiles in this application, an embodiment for installing photovoltaic tiles on a roof is given here.

Referring to Fig. 14, the roof has three beams 140 spaced apart along the first direction D1. The photovoltaic tiles 100, 200 and 300 are sequentially overlapped on the beam 140 along the first direction D1. Specifically, the lower end of the photovoltaic tile 200 overlaps the splicing area 113 of the photovoltaic tile 100, and the lower end of the photovoltaic tile 300 overlaps the splicing area 113 of the photovoltaic tile 200. The photovoltaic tiles 100, 200 and 300 are respectively overlapped on the corresponding beams 140 through their own installation portion 115. As shown in Fig. 5, the installation portion 115 is a protrusion located on the first surface 111a of the base plate 111 and extends along the second direction. Under the action of the photovoltaic tile's own gravity, the photovoltaic tile can be overlapped on the beam 140 through the installation portion 115, thereby preventing the photovoltaic tile from moving downward along the first direction D1. It can be understood that the structure and position of the installation part are not limited to the above embodiments, and the structure and position of the installation part can be set according to the specific structure of the roof on which the photovoltaic tiles are installed.

As mentioned above, with reference to Fig. 4 and Fig. 5, the height *h1* of the second end 112b of the raising portion 112 relative to the second surface 111b is the same as the thickness *t1* of the end of the tile base close to the first side 111c. As shown in Fig. 13 and Fig. 14, one end of the photovoltaic panel 121 located on the tile base 110 is raised by the second end 112b of the raising portion 112, so that the photovoltaic panel 121 on adjacent tile bases along the first direction D1 are on the same plane.

Referring to Fig. 14, in some embodiments, the oppositely distributed sides of the photovoltaic panels 121 on the photovoltaic tiles 100, 200 and 300 contact each other along the first direction D1, so that the adjacent photovoltaic panels 121 can fit together without gaps. It has the advantage of preventing dust from entering the space below the photovoltaic panels through the gaps between the photovoltaic panels, effectively avoiding dust accumulation. In addition, the photovoltaic tile in the above embodiment raises one end of the photovoltaic component through the raising portion, so that the photovoltaic panels of adjacent photovoltaic tiles are flush, which improves the aesthetics of the photovoltaic tiles and has the effect of preventing dust accumulation.

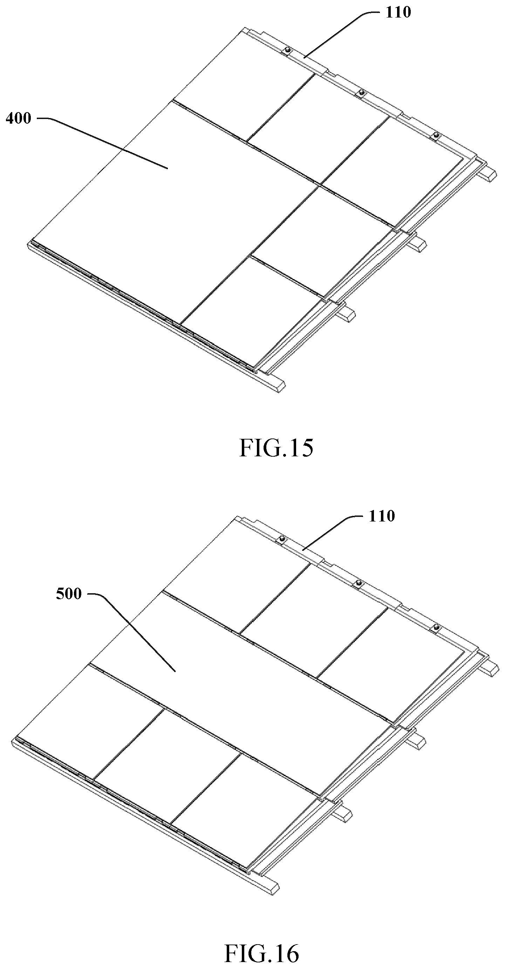

In an embodiment of the present application, the number of tile bases covered by one photovoltaic component is equal to or greater than 2. It can be understood that the number of tile bases covered by the photovoltaic components can be determined as required. For example, refer to the schematic three-dimensional view of the photovoltaic roofs of the two embodiments of the present application shown in Fig. 15 and Fig. 16. Different from the embodiment in Fig. 13, in which one photovoltaic component covers one tile base, in the embodiment of Fig. 15, the photovoltaic component 400 is generally square and covers four tile bases. This application does not limit the shape of the photovoltaic component. For example, in the embodiment of Fig. 16, the photovoltaic component 500 is roughly rectangular and covers four tile bases 110.

Another aspect of this application also proposes a sloped photovoltaic roof. The photovoltaic roof includes several photovoltaic tiles as described above. One end of the photovoltaic components laid on the photovoltaic tiles on the above-mentioned photovoltaic roof is raised, so that the photovoltaic panels of adjacent photovoltaic tiles are flush, which improves the aesthetics of the photovoltaic tiles and has the effect of preventing dust accumulation.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

In some embodiments, numbers describing the quantity of components and attributes are used, it should be understood that such numbers used in the description of the embodiments use the modifiers "about", "approximately" or "substantially" in some examples. Unless otherwise stated, "about", "approximately" or "substantially" indicates that the stated figure allows for a variation of ±20%. Accordingly, in some embodiments, the numerical parameters used in the specification and claims are approximations that can vary depending upon the desired characteristics of individual embodiments. In some embodiments, numerical parameters should take into account the specified significant digits and adopt the general digit reservation method. Although the numerical ranges and parameters used in some embodiments of the present application to confirm the breadth of the scope are approximate values, in specific embodiments, such numerical values are set as precisely as practicable.

## Claims

1. A photovoltaic tile (100, 200, 300), comprising
a tile base (110) comprising a base plate (111), a raising portion (112), a splicing area (113) and a first connecting part, wherein the base plate (111) has a first surface (111a) and a second surface (111b) opposite to each other, the tile base (110) has a first side (111c) and a second side (111d) opposite to each other, the splicing area (113) is close to the second side, the raising portion (112) is located on the second surface (111b) and extends along a first direction, and the raising portion (112) has a first end (112a) and a second end (112b) opposite to each other along the first direction; and
a photovoltaic component (120) comprising a photovoltaic panel (121) and a second connecting part, wherein the photovoltaic panel (121) is arranged on the raising portion (112) and is detachably connected to the tile base (110) through the cooperation between the first connecting part and the second connecting part, **characterized in that** the height of the second end (112b) of the raising portion (112) relative to the second surface (111b) is the same as the thickness of the tile base (110) at the first side, so that when photovoltaic tiles (100, 200, 300) are overlapped adjacently along the first direction, the photovoltaic panels (121) keep flush.

2. The photovoltaic tile in claim 1, **characterized in that**, the first connecting part comprises a snap-in slot (114b) and an installation hole (114a) opposite to each other , wherein the snap-in slot (114b) is located on the base plate (111) and adjacent to the first end (112a) of the raising portion (112); the second connecting part comprises a snap-in piece (122a) and a connector (112b) opposite to each other, wherein the snap-in piece (122a) is clamped with the snap-in slot (114b), and the connector (112b) is connected with the installation hole (114a).

3. The photovoltaic tile in claim 2, **characterized in that**, the first side of the tile base (110) has a connector escape groove (117), and the connector escape groove (117) is used to accommodate a connector of another photovoltaic tile.

4. The photovoltaic tile in claim 1, **characterized in that**, the tile base (110) further comprises an installation portion (115) located on the second side of the tile base (110) for overlapping with a beam (140) used for installing the photovoltaic tile.

5. The photovoltaic tile in claim 1, **characterized in that**, the first connecting part comprises a plurality of mounting holes, and the second connecting part comprises a plurality of buckles (122c), wherein each buckle (122c) is engaged with a corresponding mounting hole.

6. The photovoltaic tile in claim 1, **characterized in that**, the first side of the tile base (110) has a plurality of cable escape grooves (119).

7. The photovoltaic tile in claim 1, **characterized in that**, the raising portion (112) has a raising surface (112c) and a fixing surface, and there is a default angle between the raising surface (112c) and the fixing surface, wherein the raising portion (112) is fixedly connected to the second surface (111b) through the fixing surface.

8. The photovoltaic tile in claim 1, **characterized in that**, the tile base (110) further comprises a first drainage groove (116) located on one side of the tile base (110) and extending along the first direction, wherein the first drainage groove (116) has an opening (116a) at a raising end away from the photovoltaic panel (121).

9. The photovoltaic tile in claim 1, **characterized in that**, the tile base (110) further comprises a second drainage groove (118) located on the second surface (111b) of the tile base (118), wherein the second drainage groove (118) extends along a second direction, and has an opening (118a) toward the outside of the tile base (118) along the second direction.

10. The photovoltaic tile in claim 1, **characterized in that**, the second surface (111b) has a first inclined surface (111b-1) and a second inclined surface (11b-2) respectively adjacent to two opposite sides of the base plate (111) along a second direction, wherein one side of the first inclined surface (1 1 1b-1) close to the raising portion (112) is raised along the second direction, and one side of the second inclined surface (1 1 1b-2) close to the raising portion (112) is raised along the second direction.

11. The photovoltaic tile in claim 1, **characterized in that**, the number of the tile bases (118) covered by one photovoltaic component (120) is equal to or greater than 2.

12. A sloped photovoltaic roof, **characterized in that**, the photovoltaic roof comprises a plurality of photovoltaic tiles (100, 200, 300) according to any one of claims 1 to 11.

## Patentansprüche

1. Photovoltaikziegel (100, 200, 300), umfassend:
eine Ziegelbasis (110), die eine Grundplatte (111), einen Erhöhungsabschnitt (112), einen Verbindungsbereich (113) und ein erstes Verbindungsteil umfasst, wobei die Grundplatte (111) eine erste Oberfläche (111a) und eine zweite Oberfläche (111b) hat, die einander gegenüberliegen, die Ziegelbasis (110) eine erste Seite (111c) und eine zweite Seite (111d) hat, die einander gegenüberliegen, der Verbindungsbereich (113) nahe der zweiten Seite ist, der Erhöhungsabschnitt (112) auf der zweiten Oberfläche (111b) angeordnet ist und sich entlang einer ersten Richtung erstreckt, und der Erhöhungsabschnitt (112) ein erstes Ende (112a) und ein zweites Ende (112b) hat, die einander entlang der ersten Richtung gegenüberliegen; und
eine Photovoltaikkomponente (120), die ein Photovoltaikpanel (121) und ein zweites Verbindungsteil umfasst, wobei das Photovoltaikpanel (121) auf dem Erhöhungsabschnitt (112) angeordnet ist und lösbar mit der Ziegelbasis (110) durch die Zusammenarbeit zwischen dem ersten Verbindungsteil und dem zweiten Verbindungsteil verbunden ist, **dadurch gekennzeichnet, dass** die Höhe des zweiten Endes (112b) des Erhöhungsabschnitts (112) relativ zur zweiten Oberfläche (111b) die gleiche ist wie die Dicke der Ziegelbasis (110) an der ersten Seite, so dass, wenn Photovoltaikziegel (100, 200, 300) benachbart entlang der ersten Richtung überlappend sind, die Photovoltaikpanels (121) bündig bleiben.

2. Photovoltaikziegel nach Anspruch 1, **dadurch gekennzeichnet, dass** das erste Verbindungsteil eine Einrastnut (114b) und ein Installationsloch (114a) umfasst, die einander gegenüberliegen, wobei die Einrastnut (114b) auf der Grundplatte (111) angeordnet ist und benachbart zum ersten Ende (112a) des Erhöhungsabschnitts (112) ist; das zweite Verbindungsteil ein Einraststück (122a) und einen Verbinder (112b) umfasst, die einander gegenüberliegen, wobei das Einraststück (122a) mit der Einrastnut (114b) geklemmt ist, und der Verbinder (112b) mit dem Installationsloch (114a) verbunden ist.

3. Photovoltaikziegel nach Anspruch 2, **dadurch gekennzeichnet, dass** die erste Seite der Ziegelbasis (110) eine Verbinderausweichnut (117) hat, und die Verbinderausweichnut (117) verwendet wird, um einen Verbinder eines anderen Photovoltaikziegels aufzunehmen.

4. Photovoltaikziegel nach Anspruch 1, **dadurch gekennzeichnet, dass** die Ziegelbasis (110) ferner einen Installationsabschnitt (115) umfasst, der auf der zweiten Seite der Ziegelbasis (110) angeordnet ist, um mit einem Träger (140) zu überlappen, der zur Installation des Photovoltaikziegels verwendet wird.

5. Photovoltaikziegel nach Anspruch 1, **dadurch gekennzeichnet, dass** das erste Verbindungsteil eine Vielzahl von Befestigungslöchern umfasst, und das zweite Verbindungsteil eine Vielzahl von Schnallen (122c) umfasst, wobei jede Schnalle (122c) mit einem entsprechenden Befestigungsloch in Eingriff ist.

6. Photovoltaikziegel nach Anspruch 1, **dadurch gekennzeichnet, dass** die erste Seite der Ziegelbasis (110) eine Vielzahl von Kabelausweichrillen (119) hat.

7. Photovoltaikziegel nach Anspruch 1, **dadurch gekennzeichnet, dass** der Erhöhungsabschnitt (112) eine Erhöhungsoberfläche (112c) und eine Befestigungsoberfläche hat, und es einen Standardwinkel zwischen der Erhöhungsoberfläche (112c) und der Befestigungsoberfläche gibt, wobei der Erhöhungsabschnitt (112) durch die Befestigungsoberfläche fest mit der zweiten Oberfläche (111b) verbunden ist.

8. Photovoltaikziegel nach Anspruch 1, **dadurch gekennzeichnet, dass** die Ziegelbasis (110) ferner eine erste Entwässerungsrille (116) umfasst, die auf einer Seite der Ziegelbasis (110) angeordnet ist und sich entlang der ersten Richtung erstreckt, wobei die erste Entwässerungsrille (116) eine Öffnung (116a) an einem Erhöhungsende hat, das vom Photovoltaikpanel (121) entfernt ist.

9. Photovoltaikziegel nach Anspruch 1, **dadurch gekennzeichnet, dass** die Ziegelbasis (110) ferner eine zweite Entwässerungsrille (118) umfasst, die auf der zweiten Oberfläche (111b) der Ziegelbasis (110) angeordnet ist, wobei die zweite Entwässerungsrille (118) sich entlang einer zweiten Richtung erstreckt und eine Öffnung (118a) nach außen der Ziegelbasis (118) entlang der zweiten Richtung hat.

10. Photovoltaikziegel nach Anspruch 1, **dadurch gekennzeichnet, dass** die zweite Oberfläche (111b) eine erste geneigte Oberfläche (111b-1) und eine zweite geneigte Oberfläche (111b-2) hat, die jeweils benachbart zu zwei gegenüberliegenden Seiten der Grundplatte (111) entlang einer zweiten Richtung sind, wobei eine Seite der ersten geneigten Oberfläche (111b-1), die nahe dem Erhöhungsabschnitt (112) ist, entlang der zweiten Richtung angehoben ist, und eine Seite der zweiten geneigten Oberfläche (111b-2), die nahe dem Erhöhungsabschnitt (112) ist, entlang der zweiten Richtung angehoben ist.

11. Photovoltaikziegel nach Anspruch 1, **dadurch gekennzeichnet, dass** die Anzahl der Ziegelbasen (118), die von einer Photovoltaikkomponente (120) abgedeckt sind, gleich oder größer als 2 ist.

12. Geneigtes Photovoltaikdach, **dadurch gekennzeichnet, dass** das Photovoltaikdach eine Vielzahl von Photovoltaikziegeln (100, 200, 300) nach einem der Ansprüche 1 bis 11 umfasst.

## Revendications

1. Tuile photovoltaïque (100, 200, 300), comprenant :
une base de tuile (110) comprenant une plaque de base (111), une partie surélevée (112), une zone d'épissure (113) et une première partie de connexion, dans laquelle la plaque de base (111) a une première surface (111a) et une seconde surface (111b) qui sont opposées l'une à l'autre, la base de tuile (110) a un premier côté (111c) et un second côté (111d) qui sont opposés l'un à l'autre, la zone d'épissure (113) est proche du second côté, la partie surélevée (112) est située sur la seconde surface (111b) et s'étend le long d'une première direction, et la partie surélevée (112) a une première extrémité (112a) et une seconde extrémité (112b) qui sont opposées l'une à l'autre le long de la première direction ; et
un composant photovoltaïque (120) comprenant un panneau photovoltaïque (121) et une seconde partie de connexion, dans laquelle le panneau photovoltaïque (121) est disposé sur la partie surélevée (112) et est relié de manière détachable à la base de tuile (110) par la coopération entre la première partie de connexion et la seconde partie de connexion, **caractérisée en ce que** la hauteur de la seconde extrémité (112b) de la partie surélevée (112) par rapport à la seconde surface (111b) est la même que l'épaisseur de la base de tuile (110) au premier côté, de sorte que lorsque les tuiles photovoltaïques (100, 200, 300) sont chevauchées de manière adjacente le long de la première direction, les panneaux photovoltaïques (121) restent affleurants.

2. Tuile photovoltaïque selon la revendication 1, **caractérisée en ce que** la première partie de connexion comprend une fente d'encliquetage (114b) et un trou d'installation (114a) qui sont opposés l'un à l'autre, dans laquelle la fente d'encliquetage (114b) est située sur la plaque de base (111) et adjacente à la première extrémité (112a) de la partie surélevée (112) ; la seconde partie de connexion comprend une pièce d'encliquetage (122a) et un connecteur (112b) qui sont opposés l'un à l'autre, dans laquelle la pièce d'encliquetage (122a) est serrée avec la fente d'encliquetage (114b), et le connecteur (112b) est connecté avec le trou d'installation (114a).

3. Tuile photovoltaïque selon la revendication 2, **caractérisée en ce que** le premier côté de la base de tuile (110) a une rainure d'échappement de connecteur (117), et la rainure d'échappement de connecteur (117) est utilisée pour loger un connecteur d'une autre tuile photovoltaïque.

4. Tuile photovoltaïque selon la revendication 1, **caractérisée en ce que** la base de tuile (110) comprend en outre une partie d'installation (115) qui est située sur le second côté de la base de tuile (110) pour chevaucher avec une poutre (140) qui est utilisée pour installer la tuile photovoltaïque.

5. Tuile photovoltaïque selon la revendication 1, **caractérisée en ce que** la première partie de connexion comprend une pluralité de trous de montage, et la seconde partie de connexion comprend une pluralité de boucles (122c), dans laquelle chaque boucle (122c) est engagée avec un trou de montage correspondant.

6. Tuile photovoltaïque selon la revendication 1, **caractérisée en ce que** le premier côté de la base de tuile (110) a une pluralité de rainures d'échappement de câble (119).

7. Tuile photovoltaïque selon la revendication 1, **caractérisée en ce que** la partie surélevée (112) a une surface surélevée (112c) et une surface de fixation, et il y a un angle par défaut entre la surface surélevée (112c) et la surface de fixation, dans laquelle la partie surélevée (112) est reliée de manière fixe à la seconde surface (111b) par la surface de fixation.

8. Tuile photovoltaïque selon la revendication 1, **caractérisée en ce que** la base de tuile (110) comprend en outre une première rainure de drainage (116) qui est située sur un côté de la base de tuile (110) et qui s'étend le long de la première direction, dans laquelle la première rainure de drainage (116) a une ouverture (116a) à une extrémité surélevée qui est éloignée du panneau photovoltaïque (121).

9. Tuile photovoltaïque selon la revendication 1, **caractérisée en ce que** la base de tuile (110) comprend en outre une seconde rainure de drainage (118) qui est située sur la seconde surface (111b) de la base de tuile (118), dans laquelle la seconde rainure de drainage (118) s'étend le long d'une seconde direction, et a une ouverture (118a) vers l'extérieur de la base de tuile (118) le long de la seconde direction.

10. Tuile photovoltaïque selon la revendication 1, **caractérisée en ce que** la seconde surface (111b) a une première surface inclinée (111b-1) et une seconde surface inclinée (11b-2) qui sont respectivement adjacentes à deux côtés opposés de la plaque de base (111) le long d'une seconde direction, dans laquelle un côté de la première surface inclinée (111b-1) qui est proche de la partie surélevée (112) est surélevé le long de la seconde direction, et un côté de la seconde surface inclinée (111b-2) qui est proche de la partie surélevée (112) est surélevé le long de la seconde direction.

11. Tuile photovoltaïque selon la revendication 1, **caractérisée en ce que** le nombre des bases de tuile (118) qui sont couvertes par un composant photovoltaïque (120) est égal ou supérieur à 2.

12. Toit photovoltaïque incliné, **caractérisé en ce que** le toit photovoltaïque comprend une pluralité de tuiles photovoltaïques (100, 200, 300) selon l'une quelconque des revendications 1 à 11.
